# EUROPÄISCHE PATENTSCHRIFT

(11) **EP 1 867 871 B1**
(45) Veröffentlichungstag und Bekanntmachung des Hinweises auf die Patenterteilung: **13.07.2016**
(21) Anmeldenummer: 07007951.2
(22) Anmeldetag: 19.04.2007
(51) Int. Cl.: F03D 80/70

(54) **Windenergieanlage mit einem Rotor**
Wind generator with a rotor
Éolienne avec un rotor

(30) Priorität: 14.06.2006 DE 102006027543
(43) Veröffentlichungstag der Anmeldung: 19.12.2007
(73) Patentinhaber: NORDEX Energy GmbH, Langenhorner Chaussee 600 DE-22419 Hamburg (DE)
(72) Erfinder: Nitzpon, Joachim, 20255 Hamburg (DE)
(74) Vertreter: Hauck Patentanwaltspartnerschaft mbB

(56) Entgegenhaltungen:
- EP-A- 1 431 575
- EP-A- 1 457 673
- EP-A- 1 617 075
- EP-A- 1 855 001
- WO-A-2004/027260
- WO-A-2007/085644
- GB-A- 2 395 529

## Beschreibung

Die vorliegende Erfindung betrifft eine Windenergieanlage mit einem Rotor, der über eine Rotorwelle mit einer Eingangswelle eines Getriebes gekoppelt ist. Die Rotorwelle ist über ein rotorseitiges Lager und ein getriebeseitiges Lager zweifach gelagert. Das Getriebe besitzt ein Getriebegehäuse.

Erich Hau, Windkraftanlagen, dritte Aufl., Springer-Verlag, 2003, faßt die DreiPunkt-Lagerung von Rotorwelle und Getriebe bei größeren Windkraftanlagen wie folgt zusammen: Rotorwelle und Getriebe werden in dieser Konfiguration von drei Punkten unterstützt, einem vorderen Lager und zwei seitlichen Getriebeauflagern. Der Vorteil der Drei-Punkt-Lagerung liegt in einer Verkürzung der Rotorwelle und damit auch der lasttragenden Struktur des Maschinenhauses. Außerdem kann die Baugruppe "Rotorwelle mit Lagerung und Getriebe" vormontiert und gemeinsam eingebaut werden, womit ein rationeller Zusammenbau des Maschinenhauses erleichtert wird. Auch kann weitgehend auf Standardgetriebe üblicher Bauart zurückgegriffen werden.

Erich Hau erläutert ferner, dass im Stand der Technik ein weitergehender Schritt hin zu einer kompakteren Bauweise die Lagerung des Rotors unmittelbar am oder im Getriebe bekannt sei. Bei der Integration der Rotorlagerung in das Getriebe wird darauf abgestellt, dass die unvermeidlichen Verformungen des lasttragenden Gehäuses und die Biegung der Rotorwelle nicht die Getriebefunktion beeinträchtigen. Die tragende Bodenplattform des Maschinenhauses kann bei dieser Konzeption erheblich verkleinert werden; kleine Anlagen können sogar auf eine tragende Bodenplattform vollständig verzichten.

WO 2004/046582 A2 betrifft die Ausgestaltung eines Getriebes, in das ein Hauptlager für die Rotorwelle integriert ist.

DE 102 31 948 A1 betrifft die Lageranordnung für eine Windenergieanlage, bei der das Lager einen ersten mit dem Maschinengehäuse verbundenen Lagerring und einen zweiten mit der Rotornabe verbundenen Lagerring aufweist, der verdrehbar an dem ersten Lagerring gehalten ist.

Aus WO 2004/013516 A1 ist ein Planetengetriebe für eine Windenergieanlage bekannt, bei der die Hauptlagerung der Rotornabe auf einem außen auf dem Planetenradträger angeordneten Lager erfolgt.

Aus DE 102 42 707 ist ein Lager für eine Windenergieanlage bekannt, bei dem der Generator als ein das Getriebe konzentrisch umfassender Kreis ausgebildet ist. Das vordere Rotorlager ist hierbei als direkt an der Nabe angeordnetes Momentenlager ausgestaltet.

Aus WO 03/031811 ist eine Getriebeeinheit mit integrierter Rotorlagerung bekannt. Die Verbindung zwischen der Getriebeeinheit und ihrer Anbindung an das Gehäuse sowie die Rotornabe erlauben eine Demontage der vollständig zusammengebauten Getriebeeinheit von dem Gehäuse und der Rotornabe durch eine Zugbewegung. Die Rotorwelle ist hierbei sowohl getriebeseitig als auch rotorseitig gelagert. Zwischen getriebeseitigem Lager und Getriebe ist eine demontierbare Kupplung vorgesehen.

Aus WO 2007/085644 A1 ist ein Antriebsstrang zwischen einem Rotor und einem Getriebe einer Windenergieanlage bekannt, bei dem getriebeseitig an die Rotorwelle ein Flansch angesetzt ist, der in dem Getriebe gelagert ist. WO 2007/085644 A1 ist nachveröffentlichter Stand der Technik, der gemäß Artikel 54(3) und (4) EPÜ für die Beurteilung der Neuheit zu berücksichtigen ist.

EP 1 855 001 A1 ist ebenfalls Stand der Technik gemäß Artikel 54(3) und (4) EPÜ und zeigt ein Getriebegehäuse, in dem die Rotorwelle eingangsseitig gelagert ist.

WO 2004/027260 A1, EP 1 457 673 A1 und EP 1 431 575 A2 zeigen Lagerungen der Rotorwelle einer Windenergieanlage, wo die Rotorwelle getriebeseitig in dem Getriebe gelagert ist.

EP 1 617 075 A1 zeigt eine Vorrichtung zum Getriebetausch bei einer Windenergieanlage, das ein Joch aufweist, mit dem die in einem Getriebe gelagerte Rotorwelle bei einem Austausch des Getriebes gelagert ist.

Der Erfindung liegt die Aufgabe zugrunde, eine verbesserte Lagerung für die Rotorwelle der Windenergieanlage bereitzustellen, bei der mit einfachen Mitteln eine Demontage des Getriebes erfolgen kann, ohne dass zusätzliche Maßnahmen zur Abstützung der Rotorwelle und damit des Rotors erforderlich sind.

Die Aufgabe wird erfindungsgemäß durch eine Vorrichtung mit den Merkmalen aus Anspruch 1 gelöst. Vorteilhafte Ausgestaltungen zu der Erfindung bilden den Gegenstand der Unteransprüche.

Die Erfindung betrifft eine Windenergieanlage mit einem Rotor, der über eine Rotorwelle mit einem Getriebe, insbesondere mit dem Steg einer ersten Plarletenstufe des Getriebes, gekoppelt ist, wobei die Rotorwelle über ein rotorseitiges Lager und ein getriebeseitiges Lager insgesamt zweifach gelagert ist. Das Getriebe besitzt ein Getriebegehäuse. Die Verbindung zwischen Rotorwelle und Getriebe erfolgt getriebeseitig von dem getriebeseitigen Lager. Für eine einfache Trennung von Getriebe und Rotorwelle ist die Rotorwelle getriebeseitig mit einer Torsionsscheibe versehen, die das Drehmoment aus dem Rotor auf das Getriebe überträgt. Ferner stützt ein Steg des als Planetengetriebe ausgebildeten Getriebes sich über elastische Elemente an der Torsionsscheibe ab. Das getriebeseitige Lager ist über mindestens eine Abstützeinrichtung auf einem Maschinenträger aufgelagert. Das Getriebe ist mit seinem Getriebegehäuse mit der Abstützeinrichtung verbunden. Bei der erfindungsgemäßen Lagerung ist die Rotorwelle getriebeseitig nicht im Getriebe abgestützt, sondern es liegt eine separate Lagerung durch die mindestens eine Abstützeinrichtung vor. Das getriebeseitige Lager ist über eine Abstützeinrichtung auf dem Maschinenträger aufgelagert. Zugleich stützt sich das Getriebegehäuse an der Abstützeinrichtung ab, wodurch eine Drehmomentabstützung erfolgt. Der besondere Vorteil liegt darin, dass zwischen den Lagerstellen, also dem getriebeseitigen und dem rotorseitigen Lager, keine Wellennabenverbindung mehr vorliegt. Bei einer Beschädigung des Getriebes oder sonstigen Wartungsarbeiten am Triebstrang ist es lediglich erforderlich, das Getriebegehäuse von den Abstützeinrichtungen zu entfernen, um so das Getriebehäuse mit den Verzahnungsteilen des Getriebes von dem Antriebsstrang zu trennen.

Die Abstützeinrichtung weist elastische Elemente auf, über die die Abstützeinrichtung mit dem Maschinenträger verbunden ist. Über die elastischen Elemente sind Abstützeinrichtung und Maschinenträger entkoppelt.

Das Getriebegehäuse ist mit der Abstützeinrichtung lösbar verbunden, beispielsweise über Schrauben, sodass das Getriebe ohne großen Aufwand von der Abstützeinrichtung gelöst werden kann.

Die Torsionsscheibe ist mit einer Zahnkupplung versehen, über die das Drehmoment auf den Steg der ersten Planetenstufe des Getriebes übertragen wird. Der Steg Stützt sich über ein elastisches Element auf der Torsionsscheibe ab. Ein besonderer Vorteil der Zahnkupplung sowie der Abstützung des Stegs auf der Torsionsscheibe liegt darin, dass hier durch Ziehen in axialer Richtung eine Trennung erfolgen kann.

In einer bevorzugten Ausgestaltung ist der Steg generatorseitig durch ein Lager geführt. Die Bezeichnung "generatorseitig" bezieht sich auf eine Anordnung, bei der das Drehmoment vom Rotor über die Rotorwelle in das Getriebe und von dort in den Generator fließt, sodass generatorseitig die Abgangswelle des Getriebes bezeichnet.

In einer bevorzugten Ausgestaltung ist die Torsionsscheibe mit der Rotorwelle entweder stirnseitig verschraubt und/oder verstiftet. Als alternative Verbindung kann auch vorgesehen sein, dass die Torsionsscheibe mit der Rotorwelle über eine Schrumpfverbindung verbunden ist. Auch eine axiale Verzahnung von Rotorwelle und Torsionsscheibe, die ineinandergreifen und bevorzugt über eine Schraubverbindung fixiert sind, kann eingesetzt werden.

In einer bevorzugten Ausgestaltung ist das rotorseitige Lager als Loslager ausgeführt und die Abstützeinrichtung zur Aufnahme der Axialkräfte ausgebildet. In einer alternativen Ausgestaltung ist das rotorseitige Lager als Festlager ausgebildet, wobei die Abstützeinrichtung über elastische Elemente axial frei beweglich ausgebildet ist.

In einer alternativen Ausgestaltung besitzt das Getriebe eine Hohlwelle und einen getrennt ausgeführten Steg der ersten Planetenstufe. Wobei bevorzugt die Hohlwelle generatorseitig eine Zahnkupplung aufweist, die das Drehmoment biegemomentfrei auf den Steg der ersten Planetenstufe des Getriebes überträgt.

Die Erfindung wird nachfolgend anhand von zwei Ausführungsbeispielen näher erläutert.
- Fig. 1: zeigt eine Prinzipskizze der erfindungsgemäßen Lagerung,
- Fig. 2: zeigt eine bevorzugte Ausgestaltung der erfindungsgemäßen Lagerung,
- Fig. 3 u. 4: zeigen den prinzipiellen Aufbau einer Dreipunkt- und einer Vierpunkt-Lagerung aus dem Stand der Technik,
- Fig. 5: zeigt ein Beispiel für ein Entkopplungselement, das zur Anbindung des Getriebegehäuses an dem Maschinenträger dient,
- Fig. 6: zeigt eine zweite Ausgestaltung der erfindungsgemäßen Lagerung, bei der die Rotorwelle zweiteilig ausgebildet ist, und
- Fig. 7: zeigt eine perspektivische Ansicht der Ausgestaltung aus Fig. 6.

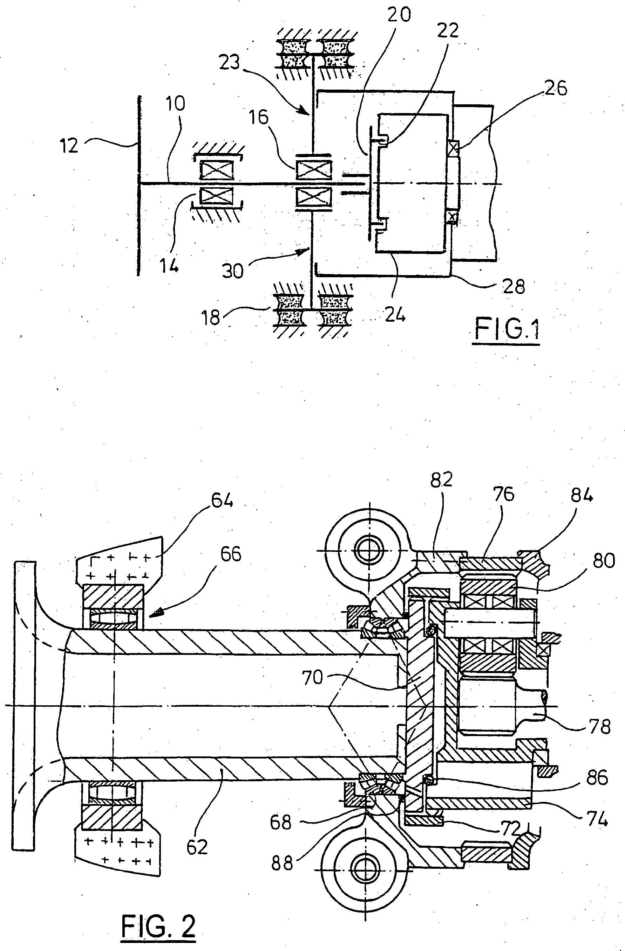

Figur 1 zeigt in einer schematischen Ansicht eine Rotorwelle 10, die rotorseitig mit einem Flansch zur Verbindung mit dem Rotor 12 ausgebildet ist. Gelagert wird die Rotorwelle 10 rotorseitig mit einem ersten Lager 14 und getriebeseitig mit einem zweiten Lager 16. Das zweite Lager 16 ist über eine Abstützeinrichtung 23 an den Maschinenträger der Windenergieanlage angebunden. Das zweite Lager 16 ist so ausgebildet, dass die Abstützeinrichtung 23 auch unter Belastung und/oder Verformung der Rotorwelle 10 rechtwinklig zur Rotorwelle 10 ausgerichtet ist. Die Abstützeinrichtung 23 ist mit elastischen Elementen 18 versehen, um keine zusätzlichen Kräfte bei der Belastung und/oder Verformung der Rotorwelle für das Lager 16 zu erzeugen. In dem dargestellten Beispiel ist das Lager 14 als Festlager ausgebildet, sodass die Abstützeinrichtung 23 keine axialen Kräfte aufnehmen muß.

Getriebeseitig ist die Welle 10 mit einer Torsionsscheibe 20 verbunden, die über eine Zahnkupplung 22 mit einem Steg 24 der ersten Stufe des Planetenträgers zusammenwirkt. Der Steg 24 ist über ein Steglager 26 in einem Getriebegehäuse 28 gelagert. Das Getriebegehäuse 28 ist wiederum im Bereich 30 mit der Abstützeinrichtung 23 verbunden.

Zur Demontage des Getriebes wird die Verbindung 30 zwischen Getriebegehäuse und Abstützeinrichtung 23 gelöst und das Getriebegehäuse 28 in axialer Richtung von der Rotorwelle 10 heruntergezogen. Über die Zahnkupplung 22 kann das Getriebe ohne weiteren Aufwand demontiert und wieder montiert werden. Die Zahnkupplung 22 ist in Figur 1 als eine mögliche Kupplung zur Übertragung des Drehmoments von der Welle 10 auf die Planetenstufe 24 ausgebildet. Weitere Kupplungen, die das Drehmoment der Rotorwelle 10 übertragen können und zugleich sich in axialer Richtung entfernen lassen, sind ebenfalls möglich. Der besondere Vorteil der Zahnkupplung liegt unter anderem auch darin, dass aufgrund der Bauform geringe radiale und axiale Verformungen nicht übertragen werden und damit eine Übertragung von Biegemomenten aus der Rotorlagerung auf das Getriebe vermieden werden kann.

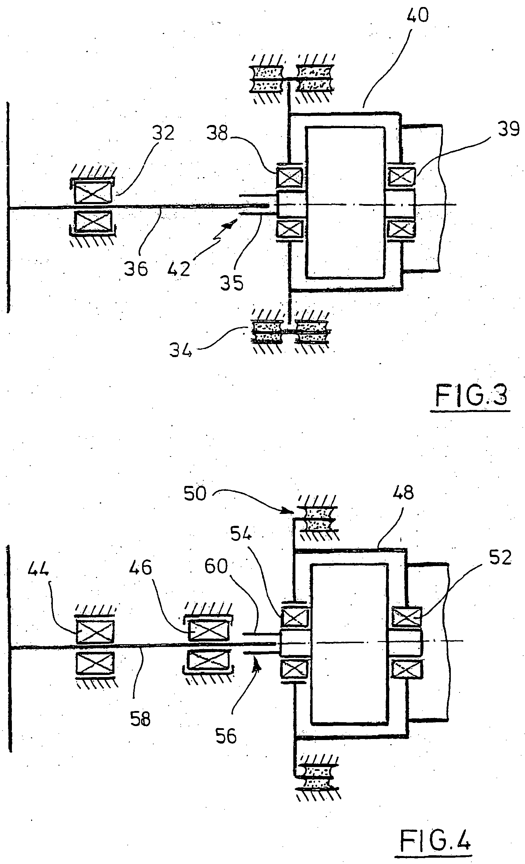

Der Vergleich mit den schematischen Darstellungen aus Figur 3 und 4 macht die wesentlichen Unterschiede der erfindungsgemäßen Lagerung deutlich. Figur 3 zeigt eine herkömmliche Drei-Punkt-Lagerung mit einem rotorseitigen Lager 32 und einer Drehmomentstütze 34. Im Gegensatz zu der erfindungsgemäßen Ausgestaltung ist die zweite Lagereinheit 38, 39 für die Welle 36 in das Getriebe 40 integriert, sodass bei einem Lösen der Wellen-Nabenverbindung 42 eine Abstützung der Rotorwelle 36 erfolgen muß.

Figur 4 zeigt eine weitere, bereits bekannte Ausgestaltung der Lagerung einer Welle, die auch als Vier-Punkt-Lagerung beschrieben wird. Die Welle ist rotorseitig durch ein Loslager 44 und getriebeseitig durch ein Festlager 46 gelagert. Das Getriebegehäuse 48 ist über Entkopplungselemente 50 mit dem Maschinenträger verbunden. Die erste Stufe des Planetengetriebes ist rotorseitig und generatorseitig jeweils über ein Lager 52, 54 gelagert. Die auch aus elastischen Elementen bestehenden Entkopplungselemente reduzieren die Zusatzkräfte, die auf die Lager 52, 54 aus den Verformungen der Rotorwelle 58 und des Maschinenträgers resultieren. Der besondere Vorteil der Vier-Punkt-Lagerung besteht darin, dass nach Lösen der Verbindung 56 zwischen Rotorwelle 58 und Hohlwelle 60 eine Abstützung der Rotorwelle bei entferntem Getriebe 48 nicht erforderlich ist und über die Entkopplungselemente keine nennenswerten Biegemomente ins Getriebe geleitet werden. Nachteilig ist an dieser Lagerung, dass die Anordnung relativ lang baut und vier Walzlager großer Dimension erforderlich macht.

Bei der in Figur 1 dargestellten Lagerung werden die Vorteile der Drei-Punkt-Lagerung mit den Vorteilen der Vier-Punkt-Lagerung verbunden.

Figur 2 zeigt in einer Schnittansicht eine Ausgestaltung der erfindungsgemäßen Lagerung.

Figur 2 zeigt eine einstückige Welle 62, die rotorseitig über ein Rollenlager, beispielsweise ein CARB-Lager 66 mit einem Maschinenträger 64 verbunden ist. Getriebeseitig ist die Welle 62 über zwei Lager 68 gelagert. Die Lager sind als Kegelrollenlager ausgebildet, die spielfrei oder nahezu spielfrei zueinander eingestellt sind. Das Lagerpaar 68 kann auch als Momentenlager ausgeführt sein. Eine Torsionsscheibe 70 ist mit der Welle 62 verbunden. Die Torsiönsscheibe 70 besitzt außenliegend eine Zahnkupplung 72, die mit dem Steg 74 des Planetengetriebes in Eingriff steht.

Schematisch dargestellt in Figur 2 ist die Sonne 78 des Planetengetriebes sowie das Hohlrad 76 der ersten Planetenstufe mit einem entsprechenden Planeten 80. Das Hohlrad 76 der ersten Planetenstufe ist zwischen dem Getriebegehäuse 84 und der Abstützeinrichtung 82 gehalten. Die Abstützeinrichtung 82 hält die bereits angesprochenen getriebeseitigen Lager 68 für die Rotorwelle 62. Der Steg 74 des Planetengetriebes stützt sich über elastische Elemente 86 an der Torsionsscheibe 70 der Welle 62 ab.

Um bei einer Beschädigung des Getriebes zu vermeiden, dass verunreinigtes Öl oder sonstiger Schmutz an das Lager 68 gelangt, ist zusätzlich eine Dichtung 88 zwischen der Abstützeinrichtung 82 und der Torsionsscheibe 70 vorgesehen.

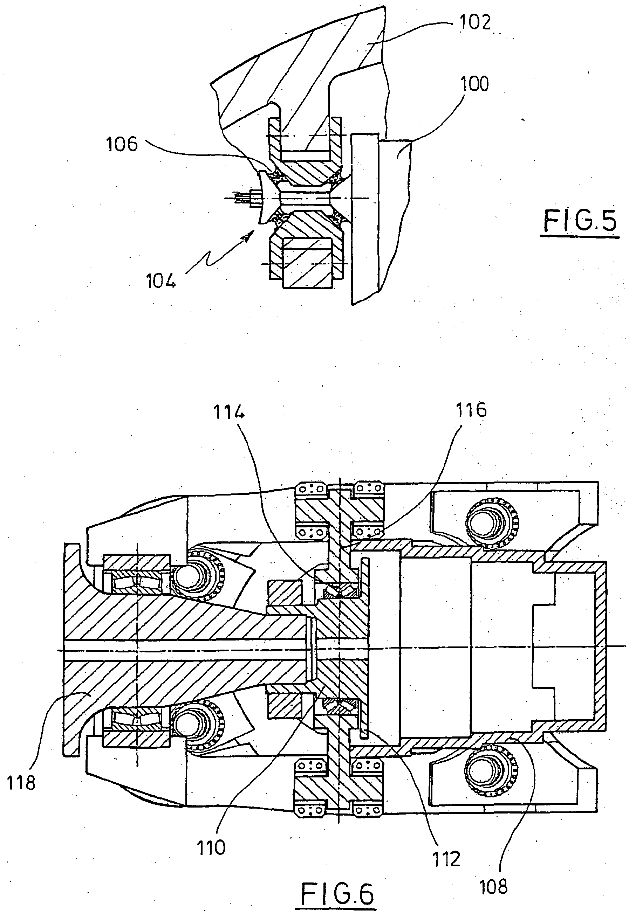

Figur 5 zeigt eine mögliche Ausgestaltung des Entkopplungselements der Abstützeinrichtung. Das in Figur 5 gezeigte Beispiel für die Auflagerung des Getriebegehäuses 100 an einem Steg des Maschinenträgers 102 erfolgt über ein Konuslager mit horizontaler Achse 104. Über elastische Elemente 106 werden die Radialkräfte aus dem Drehmoment, die Querkräfte und die Axialkräfte aufgenommen.

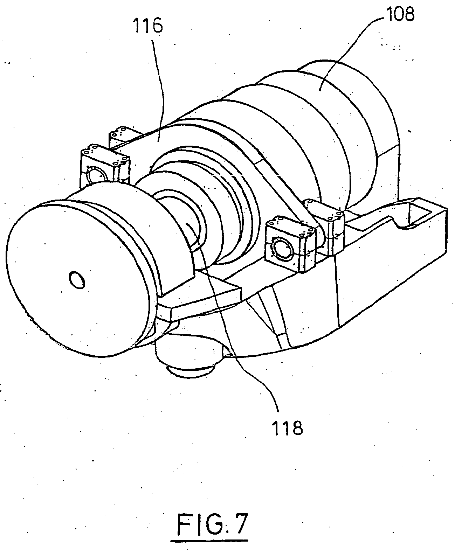

Figur 6 zeigt eine alternative Ausgestaltung der erfindungsgemäßen Lagerung in einer schematischen Ansicht von oben. Bei dieser Ausgestaltung ist das Getriebe 108 eingangsseitig mit einer Hohlwelle 110 versehen. Hohlwelle 110 und Steg (nicht dargestellt) der ersten Planetenstufe sind getrennt ausgeführt. Das Drehmoment wird von der Hohlwelle auf den Steg beispielsweise durch eine Zahnkupplung biegemomentfrei übertragen. Die Lagerung der Hohlwelle 110 mit integrierter Torsionsscheibe 112 erfolgt durch ein eingestelltes Kegelrollenlagerpaar oder ein Momentenlager 114. Stirnseitig ist das Getriebe 108 mit einer Drehmomentstütze 116 versehen. Die Drehmomentstütze 116 besitzt seitlich Entkopplungselemente, über die die Drehmomentstütze 116 an dem Maschinenträger abgestützt ist (vgl. Fig. 7). Hohlwelle 110 und Wellenabschnitt 118 müssen zur Demontage des Getriebegehäuses 108 nicht voneinander getrennt werden.

Bei der Erfindung wird die Drei-Punkt-Lagerung derart modifiziert, dass zwischen den Lagerstellen der Rotorwelle keine Wellennabenverbindung mehr existiert oder - falls eine solche vorgesehen ist - diese zur Demontage des Getriebes nicht gelöst werden muß. Ist die Rotorwelle einteilig ausgeführt, nehmen das Fest- und Loslager die Rotorlagerung vor. Das Festlager kann dabei sowohl rotorseitig als auch im Getriebe angeordnet sein. Das Getriebe ist so ausgebildet, dass das Getriebegehäuse mit Verzahnungsteilen sich an der Abstützeinrichtung abstützt. Das Getriebegehäuse wird mit der Abstützeinrichtung verschraubt, wobei die Verbindung beispielsweise als Montagestoß ausgeführt ist. Das Lager in der Abstützeinrichtung ist als Momentenlager oder eingestelltes Kegellagerpaar in O-Anordnung ausgeführt. Für die Montage der Lager ist getriebeseitig an der Rotorwelle eine Torsionsscheibe angebracht, die das Drehmoment über eine Zahnkupplung auf den Steg der ersten Planetenstufe überträgt.

Biegemomente werden hierbei nicht mit übertragen. Der Steg wird über ein elastisches Element an der Torsionsscheibe abgestützt und ist ferner axial und radial generatorseitig über ein Lager geführt. Die Torsionsscheibe ist mit der Welle entweder stirnseitig verschraubt und verstiftet oder nur verschraubt oder mit der Welle über eine Schrumpfverbindung reibschlüssig verbunden. Andere Wellen-Naben-Verbindungen, beispielsweise über eine direkt in die Welle integrierte Zahnkupplung sind möglich. Ist das rotorseitige Lager als Festlager ausgeführt, ist die Getriebeauflagerung axial frei beweglich. Ist das rotorseitige Lager dagegen als Loslager (Carb-Lager oder Pendelrollen-Lager mit axial verschiebbarem Außenring) ausgeführt, muß die Getriebeauflagerung die axialen Kräfte aufnehmen.

In der Ausgestaltung gemäß Fig. 6 und 7 ist die Rotorwelle nicht einteilig ausgebildet, sondern besitzt einen ersten Abschnitt 118, der rotorseitig gelagert ist. Ein zweiter Abschnitt 110 der Rotorwelle ist als Hohlwelle ausgebildet. Das Drehmoment wird von der Hohlwelle wieder biegemomentfrei auf den Steg (nicht dargestellt) durch eine Zahnkupplung übertragen. Die Lagerung der Hohlwelle mit integrierter Torsionsscheibe 112 ist einseitig durch ein eingestelltes Kegelrollenlagerpaar 114 oder durch ein Momentenlager ausgeführt. Das Getriebe kann durch ein Lösen des Getriebegehäuses 108 von der stirnseitigen Drehmomentstütze 116 getrennt und demontiert werden. Lediglich wenn die Wellen-Nabenverbindung zwischen erstem Wellenabschnitt 118 und der Hohlwelle 110 gelöst wird, ist eine Demontage des Rotors und/oder eine Abstützung des Rotors erforderlich.

## Patentansprüche

1. Windenergieanlage mit einem Rotor (12), der über eine Rotorwelle (10) mit einem Getriebe (24, 26, 28) gekoppelt ist, wobei die Rotorwelle (10) über ein rotorseitiges Lager (14) und ein getriebeseitiges Lager (16) zweifach gelagert und das Getriebe als ein Planetengetriebe mit einem Steg (74) ausgebildet ist, **dadurch gekennzeichnet, dass**
• eine Verbindung zwischen Rotorwelle (10) und Getriebe (24) getriebeseitig von dem getriebeseitigen Lager (16) vorgesehen ist,
• das getriebeseitige Lager (16) über mindestens eine Abstützeinrichtung (23) auf einem Maschinenträger auflagert und ein Gehäuse des Getriebes (28) mit der Abstützeinrichtung lösbar verbunden ist, wobei über die Abstützeinrichtung (23) eine Drehmomentabstützung des Getriebegehäuses (28) erfolgt,
• die Rotorwelle getriebeseitig eine Torsionsscheibe (70) besitzt, die das Drehmoment aus dem Rotor auf das Getriebe überträgt und mit dem Getriebe lösbar verbunden ist, wobei die Torsionsscheibe eine Zahnkupplung aufweist, die das Drehmoment auf den Steg einer ersten Planetenstufe des Getriebes überträgt, und
• der Steg (74) des Planetengetriebes sich über elastische Elemente (86) an der Torsionsscheibe (70) der Welle (61) abstützt.

2. Windenergieanlage nach Anspruch 1, **dadurch gekennzeichnet, dass** die Abstützeinrichtung über elastische Elemente den Maschinenträger mit dem getriebeseitigen Lager verbindet.

3. Windenergieanlage nach Anspruch 1 oder 2, **dadurch gekennzeichnet, dass** der Steg generatorseitig durch ein Lager geführt ist.

4. Windenergieanlage nach einem der Ansprüche 1 bis 3, **dadurch gekennzeichnet, dass** die Torsionsscheibe mit der Rotorwelle entweder stirnseitig verschraubt und/oder verstiftet ist.

5. Windenergieanlage nach einem der Ansprüche 1 bis 4, **dadurch gekennzeichnet, dass** die Torsionsscheibe mit der Rotorwelle über eine Schrumpfverbindung verbunden ist.

6. Windenergieanlage nach einem der Ansprüche 1 bis 5, **dadurch gekennzeichnet, dass** Rotorwelle und Torsionsscheibe jeweils eine axiale Verzahnung aufweisen.

7. Windenergieanlage nach einem der Ansprüche 1 bis 6, **dadurch gekennzeichnet, dass** das rotorseitige Lager als Loslager ausgeführt und die Abstützeinrichtung zur Aufnahme der Axialkräfte ausgebildet ist.

8. Windenergieanlage nach einem der Ansprüche 1 bis 7, **dadurch gekennzeichnet, dass** das rotorseitige Lager als Festlager ausgeführt ist und die Abstützeinrichtungen axial frei beweglich ausgebildet sind.

9. Windenergieanläge nach einem der Ansprüche 1 bis 8, **dadurch gekennzeichnet, dass** das Getriebe eine Hohlwelle und einen getrennt ausgeführten Steg der ersten Planetenstufe aufweist.

10. Windenergieanlage nach Anspruch 9, **dadurch gekennzeichnet, dass** die Hohlwelle generatorseitig eine Zahnkupplung aufweist, die das Drehmoment auf den Steg der ersten Planetenstufe des Getriebes überträgt.

## Claims

1. A wind turbine with a rotor (12), which is coupled to a gearbox (24, 26, 28) via a rotor shaft (10), wherein the rotor shaft (10) is double bearing mounted via a rotor side bearing (14) and a gear side bearing and the gearbox is designed as a planetary gear with a web (74), **characterized in that**
- a connection between rotor shaft (10) and gearbox (24) is provided at the gear side of the gear side bearing (16),
- the gear side bearing (16) props up on a machine carrier via at least one supporting device (23) and a housing of the gearbox (28) is detachably connected to the supporting device, wherein a torque support of the gearbox housing (28) is realized by means of the supporting device (23),
- the rotor shaft has a torsion disc (70) at the gear side, which is detachably connected to the gearbox and transmits the torque from the rotor to the gearbox, wherein the torsion disc has a tooth coupling, which transmits the torque to the web of the first planetary step of the gearbox, and
- the web (74) of the planetary gear is supported on the torsion disc (70) of the shaft (62) via an elastic element.

2. The wind turbine according to claim 1, **characterized in that** the supporting device connects the machine carrier to the gear side bearing via elastic elements.

3. The wind turbine according to claim 1 or 2, **characterized in that** the web is guided through a bearing at the generator side.

4. The wind turbine according to claim 1 to 3, **characterized in that** the torsion disc is either bolted and/or pinned to the rotor shaft at the front side thereof.

5. The wind turbine according to claim 1 to 4, **characterized in that** the torsion disc is connected to the rotor shaft via a shrink connection.

6. The wind turbine according to claim 1 to 5, **characterized in that** rotor shaft and torsion disc each have an axial toothing.

7. The wind turbine according to claim 1 to 6, **characterized in that** the rotor side bearing is realized as a floating bearing and the supporting device is formed for the absorption of the axial forces.

8. The wind turbine according to claim 1 to 7, **characterized in that** the rotor side bearing is realized as a fixed bearing and the supporting devices are formed as to be axially freely movable.

9. The wind turbine according to claim 1 to 8, **characterized in that** the gearbox has a hollow shaft and a separately realized web of the first planetary step.

10. The wind turbine according to claim 9, **characterized in that** the hollow shaft has a tooth coupling at the generator side, which transmits the torque to the web of the first planetary step of the gearbox.

## Revendications

1. Éolienne avec un rotor (12), qui est accouplé à un engrenage (24, 26, 28) par l'intermédiaire d'un arbre du rotor (10), l'arbre du rotor (10) étant monté par des paliers doubles coté rotor (14) et coté engrenage (16) et l'engrenage étant formé comme un engrenage planétaire avec une entretoise (74), **caractérisée en ce que**
• une liaison entre l'arbre du rotor (10) et l'engrenage (24) est pourvue au côté engrenage du palier côté engrenage (16),
• le palier côté engrenage (16) est monté sur un bâti de machine par l'intermédiaire d'au moins un dispositif de support (23), et un boîtier de l'engrenage (28) est relié au dispositif de support de manière détachable, un support de couple du boîtier de l'engrenage (28) prenant place par l'intermédiaire du dispositif de support (23),
• l'arbre du rotor a un disque de torsion (70) au côté engrenage qui transfert le couple du rotor à l'engrenage et est relié à l'engrenage de manière détachable, le disque de torsion ayant un accouplement denté qui transfert le couple à l'entretoise d'un premier étage planétaire de l'engrenage, et
• l'entretoise (74) de l'engrenage planétaire est supportée sur le disque de torsion (70) de l'arbre (61) par l'intermédiaire d'éléments élastiques (86).

2. Éolienne selon la revendication 1, **caractérisée en ce que** le dispositif de support relie le bâti de machine au palier côté engrenage par l'intermédiaire d'éléments élastiques.

3. Éolienne selon les revendications 1 ou 2, **caractérisée en ce que** l'entretoise est guidée au côté générateur à travers un palier.

4. Éolienne selon l'une quelconque des revendications 1 à 3, **caractérisée en ce que** le disque de torsion est ou vissé et/ou goupillé à l'arbre du rotor par l'avant.

5. Éolienne selon l'une quelconque des revendications 1 à 4, **caractérisée en ce que** le disque de torsion est relié à l'arbre du rotor par une jonction frettée.

6. Éolienne selon l'une quelconque des revendications 1 à 5, **caractérisée en ce que** l'arbre du rotor et le disque de torsion ont chacun une denture axiale.

7. Éolienne selon l'une quelconque des revendications 1 à 6, **caractérisée en ce que** le palier côté rotor est fait comme un palier libre, et le dispositif de support est formé pour recevoir les forces axiales.

8. Éolienne selon l'une quelconque des revendications 1 à 7, **caractérisée en ce que** le palier côté rotor est fait comme un palier fixe, et les dispositifs de support sont formés comme axialement librement mobiles.

9. Éolienne selon l'une quelconque des revendications 1 à 8, **caractérisée en ce que** l'engrenage comporte un arbre creux et une entretoise du premier étage planétaire réalisée de manière séparée.

10. Éolienne selon la revendication 9, **caractérisée en ce que** l'arbre creux comporte un accouplement à denture au côté générateur qui transfert le couple à l'entretoise du premier étage planétaire de l'engrenage.
